# EUROPEAN PATENT APPLICATION

(11) **EP 4 576 268 A1**
(43) Date of publication of application: **25.06.2025**
(21) Application number: 23854729.3
(22) Date of filing: 04.07.2023
(51) Int. Cl.: H01M 4/62, H01M 4/13, H01M 4/139

(54) **NEGATIVE ELECTRODE SLURRY FOR LITHIUM-ION SECONDARY BATTERY, NEGATIVE ELECTRODE FOR LITHIUM-ION SECONDARY BATTERY, AND LITHIUM-ION SECONDARY BATTERY**

(30) Priority: 19.08.2022 JP 2022131220
(71) Applicant: Panasonic Intellectual Property Management Co., Ltd., Kadoma-shi, Osaka 571-0057 (JP)
(72) Inventor: KOMI, Satoshi, Kadoma-shi, Osaka 571-0057 (JP); OKUNO, Yukiho, Kadoma-shi, Osaka 571-0057 (JP)
(74) Representative: Eisenführ Speiser
(86) International application number: PCT/JP2023/024778
(87) International publication number: WO 2024/038692

(57) **Abstract**

A disclosed negative electrode slurry for a lithium ion secondary battery contains a negative electrode active material, a thickener, an antiseptic component, and a solvent. The thickener includes a carboxymethylcellulose salt. The solvent includes water. The antiseptic component includes an alkane polyol and a compound represented by the following formula (1), where R1 to R5 each independently represent a hydrogen atom or a hydrocarbon group, the total number of carbon atoms included in R1 to R5 is 4 to 6, and at least three of R1 to R5 represent hydrogen atoms.

## Description

### [Technical Field]

The present disclosure relates to a negative electrode slurry for a lithium ion secondary battery, a negative electrode for a lithium ion secondary battery, and a lithium ion secondary battery.

### [Background Art]

A negative electrode for a lithium ion secondary battery is usually formed with use of a slurry (negative electrode slurry) that contains materials of the negative electrode. Various proposals have been made regarding negative electrode slurries.

PTL 1 (Japanese Laid-Open Patent Publication No. H05(1993)-074461) discloses the use of carboxymethylcellulose and the like as a water-soluble thickener.

PTL 2 (Japanese Laid-Open Patent Publication No. 2022-002166) discloses "a method for manufacturing a non-aqueous electrolyte secondary battery including an electrode body including a positive electrode, a negative electrode, and a separator, and a non-aqueous electrolyte, wherein steps for manufacturing the negative electrode includes:
a step for preparing a negative electrode mixture slurry containing a negative electrode active material, at least one of carboxymethylcellulose and a salt thereof, an alkanolamine, and water; and a step for forming a negative electrode mixture layer by applying the negative electrode mixture slurry to at least one surface of a negative electrode core body to form a coating film, drying the coating film, and compressing the coating film."

### [Citation List]

### [Patent Literature]

PTL 1: Japanese Laid-Open Patent Publication No. H05(1993)-074461
PTL 2: Japanese Laid-Open Patent Publication No. 2022-002166

### [Summary of Invention]

### [Technical Problem]

If the viscosity of a negative electrode slurry decreases, sedimentation of a negative electrode active material dispersed in the slurry occurs. Accordingly, a reduction in the viscosity of the negative electrode slurry leads to degradation of characteristics of the negative electrode and a battery in which the negative electrode is used, and a reduction in the production yield of the battery. Moreover, the reduction in the viscosity of the negative electrode slurry degrades storage properties of the negative electrode slurry and increases the production cost.

Under the above circumstances, an object of the present disclosure is to provide a negative electrode slurry for a lithium ion secondary battery that can suppress a reduction in the viscosity over time.

### [Solution to Problem]

An aspect of the present disclosure relates to a negative electrode slurry for a lithium ion secondary battery. The negative electrode slurry is a negative electrode slurry for a lithium ion secondary battery including a negative electrode active material, a thickener, an antiseptic component, and a solvent, wherein the thickener includes a carboxymethylcellulose salt, the solvent includes water, and the antiseptic component includes an alkane polyol and a compound represented by the following formula (1), 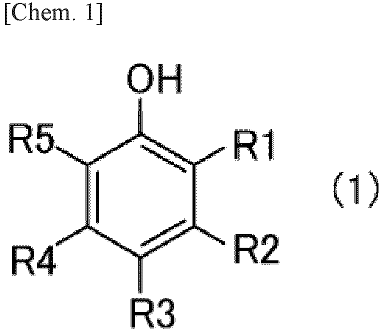 where R1 to R5 each independently represent a hydrogen atom or a hydrocarbon group, a total number of carbon atoms included in R1 to R5 is 4 to 6, and at least three of R1 to R5 represent hydrogen atoms.

Another aspect of the present disclosure relates to a negative electrode for a lithium ion secondary battery. The negative electrode includes a negative electrode mixture layer containing a negative electrode active material, a thickener, and an antiseptic component, wherein the thickener includes a carboxymethylcellulose salt, and the antiseptic component includes an alkane polyol and a compound represented by the above formula (1).

Another aspect of the present disclosure relates to a lithium ion secondary battery including the negative electrode according to the present disclosure.

Although novel features of the present invention are described in the appended claims, the following detailed description referring to the drawings will further facilitate understanding of both the configuration and the content of the present invention as well as other objects and features of the present invention.

### [Advantageous Effects of Invention]

According to the present disclosure, it is possible to obtain a negative electrode slurry that can suppress a reduction in the viscosity over time.

### [Brief Description of Drawings]

FIG. 1 is a cross-sectional view schematically showing an example of a lithium ion secondary battery according to the present embodiment.
FIG. 2 is a graph showing results of Experiment Example 1.
FIG. 3 is a graph showing results of Experiment Example 3.

### [Description of Embodiments]

The following describes examples of embodiments according to the present disclosure, but the present disclosure is not limited to the following examples. In the following description, specific numerical values and materials are described as examples, but other numerical values and materials may be applied as long as the invention according to the present disclosure can be implemented. In the present specification, the wording "from a numerical value A to a numerical value B" refers to a range that includes the numerical values A and B, and can be read as "the numerical value A or more and the numerical value B or less". Examples of a lower limit and examples of an upper limit of numerical values relating to a specific physical property or condition described below can be combined suitably as long as the lower limit is not equal to or higher than the upper limit.

### (Negative Electrode Slurry for Lithium Ion Secondary Battery)

A negative electrode slurry according to the present embodiment is a slurry for a lithium ion secondary battery. Hereinafter, the negative electrode slurry according to the present embodiment may be referred to as a "negative electrode slurry (S)" or a "slurry (S)". The slurry (S) is used in the formation of a negative electrode mixture layer included in a negative electrode of a lithium ion secondary battery.

The slurry (S) contains a negative electrode active material, a thickener, an antiseptic component, and a solvent (liquid solvent). The thickener includes a carboxymethylcellulose salt. The solvent includes water. The antiseptic component includes an alkane polyol and a compound represented by the following formula (1). 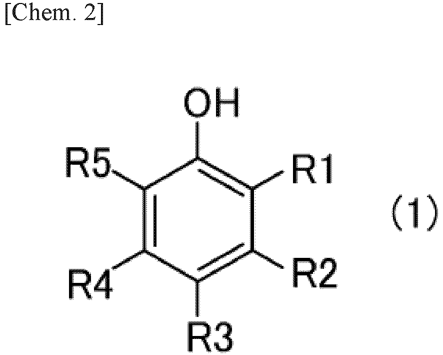 R1 to R5 each independently represent a hydrogen atom or a hydrocarbon group. The total number of carbon atoms included in R1 to R5 is 4 to 6. At least three of R1 to R5 represent hydrogen atoms.

If the negative electrode slurry does not contain an antiseptic component, the carboxymethylcellulose salt (hereinafter may be referred to as a "CMC salt") may be decomposed by microorganisms such as bacteria. If the CMC salt is decomposed, the viscosity of the negative electrode slurry decreases, and there arises a problem in that sedimentation of the negative electrode active material contained in the negative electrode slurry occurs. However, the slurry (S) according to the present embodiment contains the compound represented by the formula (1) and the alkane polyol as the antiseptic component, and therefore, decomposition of the CMC salt by microorganisms can be suppressed. As a result, it is possible to suppress a reduction in the viscosity over time and the occurrence of sedimentation of the negative electrode active material in the slurry (S). If the slurry (S) is used, it is possible to suppress unevenness of a coating film formed by applying the slurry (S) onto a negative electrode current collector. Therefore, it is possible to produce a battery having good characteristics with a high production yield by using the slurry (S).

Although there are various antiseptic agents, it is difficult to find an antiseptic agent suitable for use in batteries. For example, an amine-based antiseptic agent may degrade effects of the CMC salt because the amine-based antiseptic agent increases the pH of the slurry. The inventors of the present application newly found through studies that it is possible to obtain high effects by using a combination of two types of compounds as an antiseptic component. The present disclosure is based on this new finding.

### (Compound Represented by Formula (1))

Hereinafter, the compound represented by the formula (1) may be referred to as a "compound (1)". In the formula (1), one or two of R1 to R5 represent hydrocarbon groups. If two of R1 to R5 represent hydrocarbon groups, the hydrocarbon groups may be the same as or different from each other. Examples of the hydrocarbon groups include alkyl groups and alkenyl groups. Examples of the alkyl groups include a methyl group, an ethyl group, a propyl group, a butyl group, a pentyl group, and a hexyl group. Examples of the alkenyl groups include alkenyl groups having 2 to 6 carbon atoms. The alkyl groups and alkenyl groups may be linear or branched.

In an example of the formula (1), R4 and R5 represent hydrogen atoms, and the hydrocarbon group is an alkyl group.

In an example of the formula (1), one of R1 to R5 represents a methyl group, and another of R1 to R5 represents a propyl group (e.g., an isopropyl group). An example of the compound (1) represented by such a formula (1) is isopropylmethylphenol (4-isopropyl-3-methylphenol) represented by the following formula (1a).

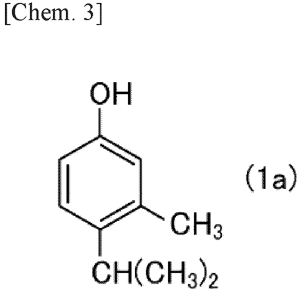

Another example of the compound (1) represented by the formula (1) is 5-methyl-2-isopropylphenol.

### (Alkane Polyol)

The alkane polyol is a chain saturated hydrocarbon substituted by two or more hydroxy groups (-OH). The number of carbon atoms included in the alkane polyol may be 2 or more, 3 or more, or 5 or more, and may be 7 or less, or 8 or less. If the number of carbon atoms is 5 to 8, the effect of suppressing the propagation of microorganisms such as bacteria is particularly high.

The number of hydroxy groups included in the alkane polyol is usually smaller than the number of carbon atoms included in the alkane polyol. The number of hydroxy groups is 2 or more, or 3 or more, for example, and may be 5 or less, or 4 or less. The number of hydroxy groups may be 2 or 3. A preferable example of the alkane polyol is an alkane diol having 5 to 8 carbon atoms. Examples of the alkane polyol include 1,2-hexanediol, 1,2-pentanediol, 1,2-octanediol, 1,3-hexanediol, and 1,2,3-hexanetriol. 1,2-hexanediol is represented by the following formula.

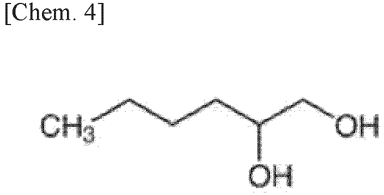

A preferable example of the combination of the compound (1) and the alkane polyol is a combination of the compound (1) in which one of R1 to R5 represents a methyl group and another of R1 to R5 represents a propyl group (e.g., isopropyl group) and an alkane diol having 5 to 8 carbon atoms. The compound (1) may be isopropylmethylphenol (4-isopropyl-3-methylphenol).

It is possible to obtain a particularly high effect by setting the content of the compound (1) represented by the formula (1) in the negative electrode slurry (S) to 0.1% by mass or more. The content may be 0.2% by mass or more. The content may be 0.5% by mass or less, or 1.0% by mass or less. It is possible to obtain a particularly high effect by setting the content of the alkane polyol in the negative electrode slurry (S) to 1.0% by mass or more. The content may be 2.0% by mass or more. The content may be 5.0% by mass or less, or 10.0% by mass or less.

It is possible to obtain a particularly high effect by setting the content of the compound (1) represented by the formula (1) in the negative electrode slurry (S) to 0.1% by mass or more and setting the content of the alkane polyol to 1.0% by mass or more. The solubility of the compound (1) to water is relatively low. The alkane polyol not only serves as the antiseptic component but also has an effect of facilitating dispersion or dissolution of the compound (1) in water. Therefore, it is particularly important to use the compound (1) and the alkane polyol in combination.

### (Thickener)

It is possible to adjust the viscosity of the slurry (S) so as to fall in an appropriate range by using the thickener. Examples of the carboxymethylcellulose salt (CMC salt) used as the thickener include an ammonium salt, a sodium salt, a potassium salt, and a lithium salt, and the carboxymethylcellulose salt may be an ammonium salt and/or a sodium salt. The CMC salt is typically a partially neutralized salt in which some carboxyl groups are neutralized. The weight average molecular weight of the CMC salt is not particularly limited, and may be 200,000 to 500,000. Note that the slurry (S) and the negative electrode mixture layer may contain carboxymethylcellulose (CMC). A portion of the CMC salt added to the slurry (S) may be converted to CMC.

There is no particular limitation on the content of the CMC salt in the slurry (S), and the CMC salt is added such that the slurry (S) has desired physical properties (e.g., viscosity). The content of the CMC salt in the slurry (S) may be 0.1% by mass or more, or 0.5% by mass or more, and may be 5.0% by mass or less, or 3.0% by mass or less.

The slurry (S) may contain a thickener other than the CMC salt. Examples of the other thickener include known thickeners, such as polyethylene glycol and polyethylene oxide.

The viscosity of the slurry (S) may be 2000 mPa·s or more, or 5000 mPa·s or more, and may be 20000 mPa·s or less, or 15000 mPa·s or less. It is possible to make the dispersibility of the negative electrode active material particularly high by setting the viscosity to 2000 mPa·s or more. If the viscosity is 20000 mPa·s or less, the slurry (S) can be applied easily. A reduction in the viscosity of the slurry (S) over time is small. Accordingly, if the slurry (S) has a viscosity in the above-described range when the slurry is produced, the slurry (S) can have a viscosity in the above-described range when 48 hours (or 72 hours) have elapsed from the preparation of the slurry (S).

The viscosity of the slurry (S) is measured with use of a BM rotational viscometer in an environment at 25°C after a rotor is rotated for 1 minute at a rotational speed of 20 rpm.

The effect of the CMC salt used as the thickener in the slurry (S) is high when the pH of the slurry (S) is 5.0 to 10.0, and particularly high when the pH of the slurry (S) is 7.0 to 9.0. The use of the antiseptic component described above makes it easy to adjust the pH of the slurry (S) so as to fall in the above-described range. The pH of the slurry (S) may be 5.0 or more, or 7.0 or more, and may be 10.0 or less, or 9.0 or less. The pH of the slurry (S) may be in a range from 5.0 to 10.0 (e.g., from 7.0 to 9.0).

### (Solvent)

The negative electrode active material is dispersed in the solvent of the slurry (S). The solvent includes water. The water content in the solvent is typically 50% by mass or more, and may be 80% by mass or more, 90% by mass or more, or 95% by mass or more. The solvent may also be constituted of only water. The water used as the solvent is not particularly limited, and may be ultrapure water, pure water, or industrial water, and A1 water defined in Japanese Industrial Standards (JIS) may also be used. The solvent may also include a water-soluble organic solvent such as an alcohol, for example. Note that the alkane polyol is not included in the solvent, but is included in the antiseptic component.

The content of the solvent in the slurry (S) may be 30% by mass or more, or 40% by mass or more, and may be 70% by mass or less, or 60% by mass or less.

### (Negative Electrode Active Material)

A substance that absorbs and releases lithium ions reversibly is used as the negative electrode active material. The negative electrode active material is not particularly limited, and it is possible to use a known negative electrode active material that is used in lithium ion secondary batteries. Examples of the negative electrode active material include carbon-based active materials and Si-based active materials. Examples of the carbon-based active materials include graphite. Examples of the graphite include natural graphite such as flake graphite, vein graphite, and amorphous graphite and artificial graphite such as massive artificial graphite (MAG) and graphitized mesophase carbon microbeads (MCMB). The graphite may have a (volume-based) median diameter in a range from 18 to 24 µm. Examples of the Si-based active materials include a composite material having a structure in which Si particles are dispersed in an oxide phase containing Si. Examples of the oxide phase containing Si include a silicon oxide (SiO₂) phase and a composite oxide phase containing Si and a metal element (e.g., Li). A carbon-based active material and an Si-based active material may also be used in combination as the negative electrode active material.

The content of the negative electrode active material in the slurry (S) may be 30% by mass or more, or 40% by mass or more, and may be 60% by mass or less, or 70% by mass or less.

### (Other Components)

The negative electrode slurry (S) may contain components other than the above-described components. There is no particular limitation on the other components, and it is possible to use components that are used in known negative electrode slurries for lithium ion secondary batteries. For example, the slurry (S) may also contain a binder and a conductive material. One type of each component may be used alone, or two or more types of each component may be used in combination. It is possible to use, as the conductive material, materials described as examples of a conductive material contained in a positive electrode mixture layer.

Examples of the binder include polyethylene, polypropylene, a fluorine-based binder, a rubber-based binder, an acrylic polymer, and a vinyl-based polymer. Examples of the fluorine-based binder include polytetrafluoroethylene (PTFE), polyvinylidene fluoride (PVDF), a tetrafluoroethylene-hexafluoropropylene copolymer (FEP), and a vinylidene fluoride-hexafluoropropylene copolymer. Examples of the rubber-based binder include acrylic rubber, styrene-butadiene rubber (SBR), and acrylonitrile rubber. The rubber-based binder is typically supplied as a dispersion containing water as a dispersion medium. The content of the binder in the slurry (S) may be in a range from 0.1 to 5% by mass (e.g., from 0.5 to 3% by mass).

### (Method for Producing Negative Electrode Slurry (S))

There is no particular limitation on the method for producing the slurry (S), and the slurry (S) can be produced with use of a method similar to known methods for producing a negative electrode slurry. Specifically, the slurry (S) can be produced by mixing components (the negative electrode active material, the thickener, the antiseptic component, etc.) of the negative electrode mixture layer with the solvent. The slurry (S) may also contain components other than the negative electrode active material, the thickener, and the antiseptic component as described above.

The present disclosure provides a method for producing a negative electrode slurry for a lithium ion secondary battery. The method includes a step of mixing a negative electrode active material, a thickener, an antiseptic component, and a solvent. The negative electrode active material, the thickener, the antiseptic component, and the solvent are described above, and therefore, redundant descriptions thereof are omitted.

The materials of the slurry (S) may be mixed with use of a commercially-available dispersion device. The dispersion device may be a dispersion device that uses a medium, such as a bead mill, a ball mill, a planetary ball mill, a kneader, a planetary mixer, or a disperser mixer. The dispersion device may be a dispersion device that does not use a medium, such as a homogenizer.

### (Negative Electrode and Method for Producing Negative Electrode)

A negative electrode according to the present embodiment is a negative electrode for a lithium ion secondary battery. The negative electrode includes a negative electrode mixture layer containing a negative electrode active material, a thickener, and an antiseptic component. The thickener includes a carboxymethylcellulose salt. The antiseptic component includes an alkane polyol and a compound (1) represented by the above formula (1).

The negative electrode mixture layer of the negative electrode according to the present embodiment contains the thickener and the antiseptic component, and therefore, the negative electrode active material is dispersed uniformly. Therefore, it is possible to produce a battery having excellent characteristics with a high production yield by using the negative electrode according to the present embodiment. Moreover, the influence of bacteria and the like can be suppressed even after the negative electrode is formed, and therefore, it is possible to maintain high quality.

The negative electrode mixture layer is formed with use of the above-described slurry (S). Accordingly, the components (components other than the solvent) contained in the slurry (S) are contained in the negative electrode mixture layer. The components (the negative electrode active material, the thickener, the antiseptic component, etc.) contained in the negative electrode mixture layer are described above, and therefore, redundant descriptions thereof are omitted. The ratio between the components contained in the slurry (S) is usually reflected as is in the ratio of the components contained in the negative electrode mixture layer. However, the contents of the respective components in the negative electrode mixture layer are higher than the contents of the respective components in the slurry (S) due to the amount of the solvent that is removed.

It is possible to obtain a particularly high effect by setting the content of the compound (1) represented by the formula (1) in the negative electrode mixture layer to 0.2% by mass or more. The content may be 0.4% by mass or more. The content may be 1.0% by mass or less, or 2.0% by mass or less. It is possible to obtain a particularly high effect by setting the content of the alkane polyol in the negative electrode mixture layer to 2.0% by mass or more. The content may be 4.0% by mass or more. The content may be 10.0% by mass or less, or 20.0% by mass or less.

It is possible to obtain a particularly high effect by setting the content of the compound (1) represented by the formula (1) to 0.2% by mass or more and setting the content of the alkane polyol to 2.0% by mass or more in the negative electrode mixture layer.

The negative electrode may include a negative electrode current collector and the negative electrode mixture layer formed on the negative electrode current collector. The negative electrode current collector is not particularly limited, and it is possible to use a known negative electrode current collector that is used in lithium ion secondary batteries. Examples of the negative electrode current collector include a metal sheet (e.g., a metal foil or a porous metal sheet). Examples of the metal constituting the negative electrode current collector include copper, nickel, and alloys containing copper and nickel.

There is no particular limitation on the thickness of the negative electrode mixture layer. If the negative electrode mixture layer is formed only on a surface of the negative electrode current collector, the thickness of the negative electrode mixture layer may be in a range from 20 to 150 µm. If two negative electrode mixture layers are formed on opposite surfaces of the negative electrode current collector, the total thickness of the two negative electrode mixture layers may be in a range from 40 to 300 µm.

There is no particular limitation on the method for producing the negative electrode, except that the above-described slurry (S) is used, and it is also possible to apply a known method for producing a negative electrode. If the negative electrode includes the negative electrode current collector, the negative electrode may be produced with use of a method including the following steps (i) to (iii). The step (i) is a step for preparing the slurry (S) by mixing the materials of the slurry (S).

The step (ii) is a step for forming a coating film by applying the slurry (S) to the negative electrode current collector. There is no particular limitation on the method for applying the slurry (S), and it is also possible to apply a known application method. For example, it is possible to use a slit die coater, a reverse roll coater, a lip coater, a blade coater, a knife coater, a gravure coater, a dip coater, or the like.

The step (iii) is a step for removing at least a portion of the solvent from the coating film. The step (iii) may be performed by drying the coating film at a temperature of 100°C to 200°C for 10 minutes to 1 hour. Thus, a laminate (negative electrode) including the negative electrode current collector and a mixture layer formed on the negative electrode current collector can be formed.

After the step (iii), the laminate may be rolled as necessary. Also, after the step (iii), the laminate may be cut or a lead may be connected to the laminate as necessary, for example. Thus, the negative electrode can be produced.

### (Lithium Ion Secondary Battery and Method for Producing Lithium Ion Secondary Battery)

A lithium ion secondary battery according to the present embodiment includes the negative electrode according to the present embodiment. Therefore, the lithium ion secondary battery has excellent characteristics and can be produced with a high production yield. There is no particular limitation on constituent elements other than the negative electrode, and it is possible to use constituent elements of a known lithium ion secondary battery.

The following describes examples of constituent elements of the lithium ion secondary battery other than the negative electrode. However, it is also possible to use constituent elements other than the following examples.

### (Positive Electrode)

The positive electrode includes a positive electrode mixture layer. The positive electrode may include a positive electrode current collector and the positive electrode mixture layer formed on the positive electrode current collector. The positive electrode may be formed with use of a known method. For example, the positive electrode mixture layer may be formed by applying a positive electrode slurry to the positive electrode current collector to form a coating film, drying the coating film, and rolling the coating film. The method described as an example of the method for forming the negative electrode mixture layer with use of the negative electrode slurry may be used as a method for forming the positive electrode mixture layer with use of the positive electrode slurry.

The positive electrode mixture layer contains a positive electrode active material, and may also contain other components (e.g., a conductive material, a binder, a thickener, etc.). The positive electrode slurry can be obtained by mixing these components with a dispersion medium. There is no particular limitation on these components and the dispersion medium, and it is possible to use known substances that are used in positive electrodes of lithium ion secondary batteries.

Examples of the positive electrode active material include olivine-type lithium salts (e.g., LiFePO₄), chalcogen compounds (titanium disulfide, molybdenum disulfide), manganese dioxide, and lithium-containing composite metal oxides. Examples of the lithium-containing composite metal oxides include metal oxides containing lithium and transition metals. A portion of the transition metals contained in the metal oxides may be substituted by different elements. Examples of the different elements include Na, Mg, Sc, Y, Mn, Fe, Co, Ni, Cu, Zn, Al, Cr, Pb, Sb, and B. Preferable examples of the different elements include Mn, Al, Co, Ni, and Mg. One different element may be contained, or two or more different elements may be contained.

Examples of the lithium-containing composite metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F. In each formula, M represents at least one element selected from the group consisting of Na, Mg, Sc, Y, Mn, Fe, Co, Ni, Cu, Zn, Al, Cr, Pb, Sb, V, and B. x, y, and z satisfy: x=0 to 1.2, y=0 to 0.9, and z=2.0 to 2.3.

Examples of the conductive material include carbon black, graphite, carbon fiber, and metal fiber. Examples of the binder include the substances described as examples of the binder that may be contained in the slurry (S). Examples of the thickener include carboxymethylcellulose salts.

Examples of the dispersion medium include amides (e.g., N,N-dimethylformamide, dimethylacetamide, methylformamide, hexamethyl sulfonamide, and tetramethylurea), N-methyl-2-pyrrolidone (NMP), ketones (e.g., amines such as dimethylamine, methylethylketone, acetone, and cyclohexane), ethers (e.g., tetrahydrofuran), and sulfoxides (e.g., dimethylsulfoxide).

### (Separator)

A separator is disposed between the positive electrode and the negative electrode. The separator is not particularly limited, and it is possible to use a known separator that is used in lithium ion secondary batteries. The separator may be a microporous film formed from a polymer material. Examples of the polymer material include polyethylene, polypropylene, polyvinylidenefluoride, polyvinylidenechloride, polyacrylonitrile, polyacrylamide, polytetrafluoroethylene, polysulfone, polyethersulfone, polycarbonate, polyamide, polyimide, polyethers (polyethylene oxide and polypropylene oxide), cellulose (carboxymethylcellulose and hydroxypropylcellulose), poly(meth)acrylic acid, and poly(meth)acrylic esters. One of these polymer materials may be used alone, or two or more of them may be used in combination. The separator may include a plurality of layers stacked on each other.

### (Electrolyte)

A non-aqueous electrolyte can be used as an electrolyte. The electrolyte may be a non-aqueous electrolyte containing a non-aqueous solvent and an electrolyte salt. The electrolyte may be a gel electrolyte obtained with use of a gel polymer or the like.

Examples of the non-aqueous solvent include cyclic carbonates and chain carbonates. Examples of the cyclic carbonates include ethylene carbonate, propylene carbonate, and butylene carbonate. Examples of the chain carbonates include dimethyl carbonate, diethyl carbonate, and ethylmethyl carbonate.

Examples of the electrolyte salt include LiPF₆, LiBF₄, LiClO₄, LiAsF₆, LiCF₃SO₃, LiN(SO₂CF₃)₂, LiN(SO₂C₂F₅)₂, and LiC(SO₂CF₃)₃. One non-aqueous solvent may be used alone, or two or more non-aqueous solvents may be used in combination. One electrolyte salt may be used alone, or two or more electrolyte salts may be used in combination.

### (Others)

The shape of the lithium ion secondary battery is not particularly limited, and may be a cylindrical shape, a rectangular shape, or a coin shape (including a button shape). A case of the lithium ion secondary battery is selected according to the shape of the lithium ion secondary battery, for example. The case may be made of metal or resin. The positive electrode, the negative electrode, and the separator compose an electrode group. The electrode group may be a wound electrode group formed by winding the positive electrode, the negative electrode, and the separator. Alternatively, the electrode group may be a stacked electrode group formed by stacking the positive electrode, the negative electrode, and the separator.

There is no particular limitation on the method for producing the lithium ion secondary battery, except that the negative electrode according to the present embodiment is used. The lithium ion secondary battery according to the present embodiment may be produced with use of a known method for producing a lithium ion secondary battery.

The present disclosure provides a method for producing a lithium ion secondary battery. The method includes a step for producing the above-described slurry (S).

The following specifically describes an example of the lithium ion secondary battery according to the present disclosure with reference to the drawings. The constituent elements described above can be applied to constituent elements of the following example. Also, the constituent elements of the following example can be modified based on the above description. Also, matter described below may be applied to the embodiment described above. In the following example, constituent elements that are not essential to the lithium ion secondary battery according to the present disclosure may be omitted.

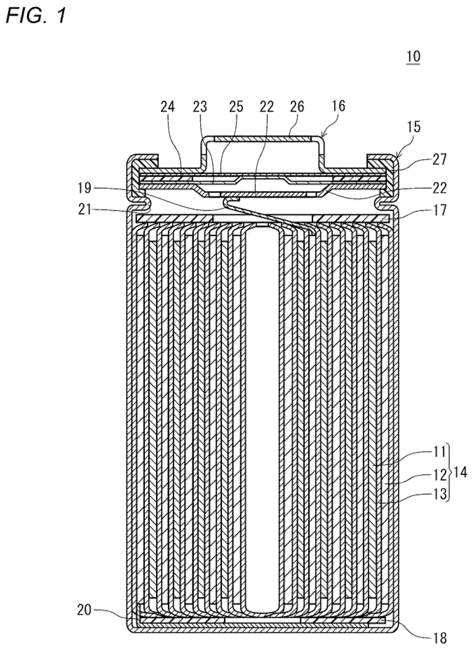

FIG. 1 is a cross-sectional view schematically showing a cross section of an example of a lithium ion secondary battery according to the present embodiment. A lithium ion secondary battery 10 shown in FIG. 1 is a cylindrical battery. The secondary battery 10 includes a cylindrical battery case, a wound electrode group 14 housed in the battery case, and a non-aqueous electrolyte (not shown). The battery case includes a case body 15 and a sealing body 16 that seals an opening of the case body 15. The case body 15 is a cylindrical metal case having a bottom and includes a step portion 21. A gasket 27 is disposed between the case body 15 and the sealing body 16. Insulating plates 17 and 18 are respectively disposed at opposite ends of the electrode group 14 in the case body 15.

The sealing body 16 includes a filter 22, a lower valve body 23, an insulating member 24, an upper valve body 25, and a cap 26. The members excluding the insulating member 24 are electrically connected to each other.

The electrode group 14 is formed by winding a positive electrode 11, a negative electrode 12, and a separator 13 such that the separator 13 is disposed between the positive electrode and the negative electrode. The positive electrode 11, the negative electrode 12, and the separator 13 each have a band shape. The positive electrode 11 includes a positive electrode current collector and positive electrode mixture layers formed on opposite surfaces of the positive electrode current collector. The negative electrode 12 includes a negative electrode current collector and negative electrode mixture layers formed on opposite surfaces of the negative electrode current collector. The negative electrode 12 is the above-described negative electrode according to the present embodiment. The negative electrode 12 can be formed with use of the negative electrode slurry (S.)

An end of a positive electrode lead 19 is connected to the positive electrode 11, and the other end of the positive electrode lead 19 is connected to the filter 22. That is to say, the positive electrode 11 is electrically connected to the cap 26 that also serves as a positive electrode terminal. An end of a negative electrode lead 20 is connected to the negative electrode 12, and the other end of the negative electrode lead 20 is connected to the case body 15 that also serves as a negative electrode terminal.

### (Supplementary Note)

The following technologies are disclosed by the above description.

### (Technology 1)

A negative electrode slurry for a lithium ion secondary battery including a negative electrode active material, a thickener, an antiseptic component, and a solvent,
wherein the thickener includes a carboxymethylcellulose salt,
the solvent includes water, and
the antiseptic component includes an alkane polyol and a compound represented by the above formula (1), where R1 to R5 each independently represent a hydrogen atom or a hydrocarbon group, a total number of carbon atoms included in R1 to R5 is 4 to 6, and at least three of R1 to R5 represent hydrogen atoms.

### (Technology 2)

The negative electrode slurry according to the technology 1, wherein R4 and R5 represent hydrogen atoms, and
the hydrocarbon group is an alkyl group.

### (Technology 3)

The negative electrode slurry according to the technology 1 or 2, wherein the alkane polyol is an alkane diol having 5 to 8 carbon atoms.

### (Technology 4)

The negative electrode slurry according to any one of the technologies 1 to 3, wherein the compound represented by the formula (1) is isopropylmethylphenol.

### (Technology 5)

The negative electrode slurry according to any one of the technologies 1 to 4, wherein the compound represented by the formula (1) is contained in an amount of 0.1% by mass or more, and
the alkane polyol is contained in an amount of 1.0% by mass or more.

### (Technology 6)

A negative electrode for a lithium ion secondary battery, including:
a negative electrode mixture layer containing a negative electrode active material, a thickener, and an antiseptic component,
wherein the thickener includes a carboxymethylcellulose salt, and
the antiseptic component includes an alkane polyol and a compound represented by the above formula (1), where R1 to R5 each independently represent a hydrogen atom or a hydrocarbon group, a total number of carbon atoms included in R1 to R5 is 4 to 6, and at least three of R1 to R5 represent hydrogen atoms.

### (Technology 7)

The negative electrode according to the technology 6, wherein R4 and R5 represent hydrogen atoms, and
the hydrocarbon group is an alkyl group.

### (Technology 8)

The negative electrode according to the technology 6 or 7, wherein the alkane polyol is an alkane diol having 5 to 8 carbon atoms.

### (Technology 9)

The negative electrode according to any one of the technologies 6 to 8, wherein the compound represented by the formula (1) is isopropylmethylphenol.

### (Technology 10)

The negative electrode according to any one of the technologies 6 to 9, wherein the compound represented by the formula (1) is contained in an amount of 0.2% by mass or more, and
the alkane polyol is contained in an amount of 2.0% by mass or more.

### (Technology 11)

A lithium ion secondary battery including the negative electrode according to any one of the technologies 6 to 10.

### Examples

The following describes the present disclosure in more detail using examples, but the present disclosure is not limited to the following examples.

### (Experiment Example 1)

Negative electrode slurries for a lithium ion secondary battery were produced and evaluated as follows in Experiment Example 1.

### (Slurry A1)

First, a mixture of water, graphite powder (negative electrode active material), carboxymethylcellulose sodium (thickener), 4-isopropyl-3-methylphenol (antiseptic component), and 1,2-hexanediol (antiseptic component) was stirred for 1 hour with use of a planetary mixture to obtain a slurry A1 (negative electrode slurry for a lithium ion secondary battery). Hereinafter, the carboxymethylcellulose sodium may be referred to as "CMC-Na". Water, graphite powder, CMC-Na, 4-isopropyl-3-methylphenol, and 1,2-hexanediol were mixed at a mass ratio of: water:graphite powder: CMC-Na:4-isopropyl-3-methylphenol:1,2-hexanediol=50.0:48.5:0.4:0.1:1.0.

### (Slurries C1 to C4)

Slurries C1 to C4 were produced with use of the same method under the same conditions as those used in the production of the slurry A1, except that the amounts of the antiseptic components were changed as shown in Table 1. Note that, in the production of the slurries C1 to C4, the content of graphite powder was set to 48.5% by mass and the content of CMC-Na was set to 0.4% by mass as in the production of the slurry A1.

**[Table 1]**

| Slurry | Antiseptic component 1 | | Antiseptic component 2 | |
|---|---|---|---|---|
| | Compound | Content (% by mass) | Compound | Content (% by mass) |
| A1 | IPMP | 0.1 | 1,2-hexanediol | 1.0 |
| C1 | None | | None | |
| C2 | IPMP | 0.1 | None | |
| C3 | IPMP | 0.25 | None | |
| C4 | None | | 1,2-hexanediol | 1.0 |
| IPMP: 4-isopropyl-3-methylphenol | | | | |

### (Measurement of change in viscosity over time)

With respect to each negative electrode slurry obtained as described above, a change in the viscosity over time was measured with use of the following method. First, a bacteria liquid containing bacteria was added to the negative electrode slurry. Bacteria that produce an enzyme that decomposes CMC-Na were used. Next, the negative electrode slurry to which the bacteria liquid had been added was placed in a container having an inner diameter of 55 mm and a depth of 115 mm, and the temperature was kept at 25±0.2°C in a constant temperature water bath. A change in the viscosity of the negative electrode slurry over time was measured in this state. The viscosity was measured with use of a BM rotational viscometer ("TVB-15M" manufactured by Toki Sangyo Co., Ltd). The viscosity was measured after a rotor was rotated for 1 minute at a rotational speed of 20 rpm.

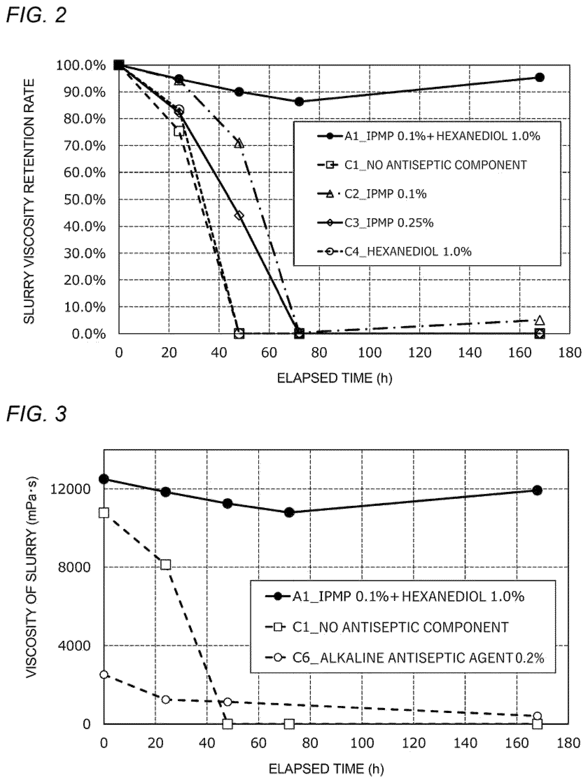

Measurement results are shown in FIG. 2. % in the legends in FIG. 2 represents "% by mass". The vertical axis in FIG. 2 shows relative values (retention rate) when an initial viscosity is taken to be 100%. The higher the retention rate is, the smaller the reduction in the viscosity is.

The slurry A1 is a slurry (S) according to the present embodiment. The slurries C1 to C4 are slurries of Comparative Examples. As shown in FIG. 2, the viscosity of the slurry A1 hardly decreased over time. In contrast, the viscosities of the slurries C1 to C4 significantly decreased with the passage of time.

### (Experiment Example 2)

Slurries A2 and C5 were produced with use of the same method under the same conditions as those used in the production of the slurry A1, except that the amounts of the antiseptic components were changed as shown in Table 2. Note that, in the production of the slurries A2 and C5, the content of graphite powder was set to 48.5% by mass and the content of CMC-Na was set to 0.4% by mass as in the production of the slurry A1.

**[Table 2]**

| Slurry | Antiseptic component 1 | | Antiseptic component 2 | |
|---|---|---|---|---|
| | Compound | Content (% by mass) | Compound | Content (% by mass) |
| A2 | IPMP | 0.05 | 1,2-hexanediol | 1.0 |
| C5 | IPMP | 0.1 | ethanol | 1.0 |
| IPMP: 4-isopropyl-3-methylphenol | | | | |

The slurry A2 is a slurry (S) according to the present embodiment. The slurry C5 is a slurry of Comparative Example. A change in the viscosity of each of the obtained slurries over time was measured with use of the same method under the same conditions as those used in Experiment Example 1. Specifically, a bacteria liquid was added to the slurry, thereafter the slurry was held in a constant temperature bath, and a change in the viscosity over time was measured as in Experiment Example 1.

As a result of the measurement, the viscosity retention rate of the slurry C5 was almost 0% when 50 hours elapsed. In contrast, the viscosity retention rate of the slurry A2 when 50 hours elapsed was high. However, the viscosity retention rate of the slurry A1 was higher than the viscosity retention rate of the slurry A2.

### (Experiment Example 3)

In Experiment Example 3, the influence of the pH of the negative electrode slurries was examined. A slurry C6 was produced with use of the same method under the same conditions as those used in the production of the slurry A1 in Experiment Example 1, except that the antiseptic components were changed. In the production of the slurry C6, 2-hydroxymethyl amino ethanol, which is an alkaline antiseptic agent, was used as an antiseptic component instead of 4-isopropyl-3-methylphenol and 1,2-hexanediol. Note that the content of the alkaline antiseptic agent in the negative electrode slurry was set to 0.2% by mass. The pH of the slurry C6 immediately after the production was 10.2.

A change in the viscosity of the slurry C6 over time was measured with use of the same method under the same conditions as those used in Experiment Example 1. Specifically, a bacteria liquid was added to the slurry C6, thereafter the slurry was held in a constant temperature bath, and a change in the viscosity over time was measured as in Experiment Example 1.

FIG. 3 shows the change in the viscosity of the slurry C6 over time. FIG. 3 also shows the results of the slurries A1 and C1 in Experiment Example 1. Note that the pH of the slurry A1 immediately after the production was 7.2 and the pH of the slurry C1 immediately after the production was 7.2.

As shown in FIG. 3, the viscosity of the slurry C6 was low from immediately after the production. It is thought that this is because the effect of CMC-Na was reduced due to the pH exceeding 10. CMC-Na may be depolymerized if the pH is high.

### [Industrial Applicability]

The present disclosure can be used for a negative electrode slurry for a lithium ion secondary battery, a negative electrode for a lithium ion secondary battery, and a lithium ion secondary battery.

Although the present invention has been described in terms of the presently preferred embodiment, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications that fall within the true spirit and scope of the invention.

### [Reference Signs List]

10: lithium ion secondary battery, 11: positive electrode, 12: negative electrode, 13: separator, 14: electrode group

## Claims

1. A negative electrode slurry for a lithium ion secondary battery, comprising:
a negative electrode active material;
a thickener;
an antiseptic component; and
a solvent,
wherein the thickener includes a carboxymethylcellulose salt,
the solvent includes water, and
the antiseptic component includes an alkane polyol and a compound represented by the following formula (1), 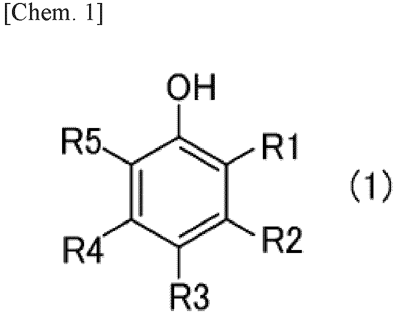
where R1 to R5 each independently represent a hydrogen atom or a hydrocarbon group, a total number of carbon atoms included in R1 to R5 is 4 to 6, and at least three of R1 to R5 represent hydrogen atoms.

2. The negative electrode slurry according to claim 1,
wherein R4 and R5 represent hydrogen atoms, and
the hydrocarbon group is an alkyl group.

3. The negative electrode slurry according to claim 2,
wherein the alkane polyol is an alkane diol having 5 to 8 carbon atoms.

4. The negative electrode slurry according to claim 3,
wherein the compound represented by the formula (1) is isopropylmethylphenol.

5. The negative electrode slurry according to any one of claims 1 to 4,
wherein the compound represented by the formula (1) is contained in an amount of 0.1% by mass or more, and
the alkane polyol is contained in an amount of 1.0% by mass or more.

6. A negative electrode for a lithium ion secondary battery, comprising:
a negative electrode mixture layer containing a negative electrode active material, a thickener, and an antiseptic component,
wherein the thickener includes a carboxymethylcellulose salt, and
the antiseptic component includes an alkane polyol and a compound represented by the following formula (1), 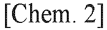 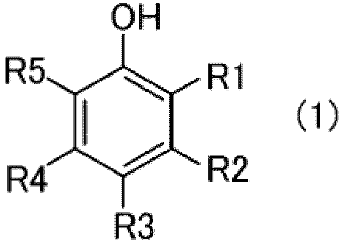
where R1 to R5 each independently represent a hydrogen atom or a hydrocarbon group, a total number of carbon atoms included in R1 to R5 is 4 to 6, and at least three of R1 to R5 represent hydrogen atoms.

7. The negative electrode according to claim 6,
wherein R4 and R5 represent hydrogen atoms, and
the hydrocarbon group is an alkyl group.

8. The negative electrode according to claim 7,
wherein the alkane polyol is an alkane diol having 5 to 8 carbon atoms.

9. The negative electrode according to claim 8,
wherein the compound represented by the formula (1) is isopropylmethylphenol.

10. The negative electrode according to any one of claims 6 to 9,
wherein the compound represented by the formula (1) is contained in an amount of 0.2% by mass or more, and
the alkane polyol is contained in an amount of 2.0% by mass or more.

11. A lithium ion secondary battery comprising the negative electrode according to claim 6.
